# EUROPEAN PATENT SPECIFICATION

(11) **EP 1 830 667 B1**
(45) Date of publication and mention of the grant of the patent: **30.12.2009**
(21) Application number: 06819850.6
(22) Date of filing: 29.11.2006
(51) Int. Cl.: A23L 1/09, A23L 1/0522, A23L 1/307, A23L 1/308, A21D 13/00, A21D 2/18, A23G 1/00, A23G 9/00, A21D 13/06

(54) **LOW CALORIE FAT SUBSTITUTE**
KALORIENARMER FETTERSATZ
SUBSTITUT DE MATIÈRE GRASSE FAIBLE EN CALORIES

(30) Priority: 02.12.2005 EP 05257437
(43) Date of publication of application: 12.09.2007
(73) Proprietor: Cargill, Incorporated, Wayzata, MN 55391 (US)
(72) Inventor: SARNEEL, Frans Johan, NL-4574 RJ Zuiddorpe (NL); PEREMANS, Johan Augusta Maria Antoon, B-2180 Ekeren (BE); JONCKERS, Johan, B-1200 Sint-Lambrechts-Woluwe (BE)
(74) Representative: Wilkinson, Stephen John
(86) International application number: PCT/EP2006/069082
(87) International publication number: WO 2007/063084

(56) References cited:
- EP-A- 1 462 005
- WO-A-2005/029967
- US-A- 5 409 726
- US-A- 5 711 986

## Description

### Technical field

The present invention relates to a fat substitute comprising from 20 to 60% w/w polyols and from 20 to 40% w/w n-alkenyl succinate starch.

### Background of the invention

In the food processing industry, including that of baked goods, it has, for a long time, been desirable to develop high quality, convenient foods, having ever longer shelf-lives, easier storage conditions, reduced calorie content and high appeal to sight, touch, taste and smell.

New trends such as more natural, healthier, more nutritious foods, reduced fat content, environmental friendliness, freshness and clean label are also in demand.

One particular focus has been the replacement of fat. High intake of fat is associated with increased risk for obesity, some types of cancer. Studies also show strong evidence of a relationship between a high saturated fat intake and a high blood cholesterol level, which is a risk factor for coronary heart disease.

A number of fat substitutes or fat replacers have therefore been developed. Food technologists are investigating a wide range of ingredients and processes to replace fat in foods and beverages.

For example, fats have been replaced by protein-based fat replacers, fat-based fat replacers, or carbohydrate-based fat replacers.

For example US 6,838,107 relates to a method for preparing an improved low-calorie, low-fat foodstuff wherein the improvement includes the partial or total replacement of the fat by a taste effective amount of maltitol.

US 5,409,726 relates to a method of preparing reduced fat foods employing a fragmented starch hydrolysate and a minor amount of a hydrophilic agent.

CA 2,228,805 relates to a high fibre, low fat, low calorie, food formulation comprising an edible cellulose compound and an edible polyhydric alcohol.

Nevertheless there are fat replacers on the market which do not satisfy the needs. Fat cannot be taken out of food without compensating for its various properties.

It is all about texture, flavour development and in order to mimic fat, fat replacers have been mixed and matched into "systems" because each fat replacer only mimics one or two functions of fat.

Thus, there exists a need for an improved fat substitute, which acts in itself as a system and mimics several or preferably all functions of fat. Such a "system" is suitable for entire or partial fat content replacement, for use in the preparation of high quality bakery products, but which can be extended to diverse food applications. The present invention provides such a fat substitute.

### Summary of the invention

The current invention relates to a fat substitute comprising a) from 30 to 60% w/w polyols, preferably from 45 to 55%, and b) from 20 to 40% w/w n-alkenyl succinate starch, preferably from 25 to 35%. Preferably, at least one n-alkenyl succinate starch is an n-alkenyl succinate waxy starch. More preferably, the n-alkenyl succinate starch is n-octenyl succinate starch (n-OSA). The n-octenyl succinate starch is preferably selected from thinned n-octenyl succinate starch.

In a preferred embodiment, the fat substitute further comprises a thickener. The thickener is selected from starches, flours, hydrocolloids and mixtures thereof, preferably starches, more preferably corn starches. In a more preferred embodiment, the fat substitute comprises a) from 30 to 60% w/w polyols, preferably from 45 to 55%, b) from 20% to 40% w/w n-alkenyl succinate starch, preferably from 25 to 35%, and c) from 1% to 35% w/w thickener, preferably from 15 to 30%.

Furthermore, the current invention relates to a dry fat substitute comprising a blend of the fat substitute according to the current invention. In addition, it relates to a semi-liquid fat substitute comprising an edible liquid and a fat substitute according to the current invention. Preferably, the consistency of the semi-liquid fat substitute at 20°C is in the range from 50 to 400 loadgram, preferably from 100 to 300, more preferably from 100 to 250. More preferably, said semi-liquid fat substitute comprises from 5 to 30% edible liquid based on the dry weight of the fat substitute, even more preferably 15 to 25%.

Preferably the fat substitute of the invention is used in bakery products, in mayonnaise, in sauces, in dressings, in ice cream, in frozen desserts, in chocolate based drinks, and for the preparation of margarine.

### Detailed description of the invention

The fat substitute of the current invention is set-up such that the ingredients mimic as a whole the function of fat. Without limiting ourselves to an explanation of the set-up of the system, it might well be that microparticles are formed between the ingredients of the system, which can be seen from the aerated structure, the glossy surface, such that the function of fat is fulfilled. Functions, like bulk, creamy structure, mouthfeel, moisture holding capacity, adhesiveness and shelf stability are fulfilled by the fat substitute of the current invention.

The current invention relates to a fat substitute wherein the fat substitute comprises a) from 20 to 60% w/w polyols, preferably from 30 to 60%, more preferably from 45 to 55% and b) from 20 to 40% w/w n-alkenyl succinate starch, preferably from 25 to 35%. The n-alkenyl succinate starch may be thinned (by acid or enzymatic thinning), undextrinised, dextrinised, granular, pregelatinised and/or stabilised. Alternatively, it may be a mixture of two or more of such n-alkenyl succinate starches. Preferably, at least one n-alkenyl succinate starch is an n-alkenyl succinate waxy starch. More preferably, the n-alkenyl succinate starch is n-octenyl succinate starch (n-OSA).

Preferably, the n-OSA starch is selected from thinned starches. The degree of substitution of the n-OSA starch will preferably vary between 0.2 to 3%, even more preferably between 0.5 to 2.5%. The degree of substitution can be determined by

HPLC. The starch obtainable according to the process disclosed in EP 0811633 is also a suitable n-alkenyl succinate starch.

The polyol in the fat substitute has the following chemical formula CₙH₂ₙ₊₂Oₙ. This chemical formula is typical for hydrogenated carbohydrates but the polyol of the current invention is not necessarily obtained by hydrogenation of the carbohydrate.

Some of these polyols (e.g. erythritol) are obtainable via other chemical processes and/or microbial processes or fermentation. Typically, the polyol is selected among the triitols, tetritols, pentitols, hexitols, hydrogenated disaccharides, hydrogenated trisaccharides, hydrogenated tetrasaccharides, hydrogenated maltodextrins and mixtures thereof. More specifically the polyol can be selected from the group consisting of glycerol, erythritol, threitol, arabinitol, xylitol, ribitol, allitol, altritol, gulitol, galactitol, mannitol, sorbitol, talitol, maltitol, isomaltitol, isomalt, lactitol, and mixtures thereof. Preferably, sorbitol is selected as a suitable polyol for the fat The current invention relates to a fat substitute wherein the fat substitute comprises a) from 30 to 60% w/w polyols, preferably 45 to 55%, and b) from 20 to 40% w/w n-alkenyl succinate starch, preferably 25 to 35%. The invention preferably relates to a fat substitute wherein the fat substitute comprises a) from 30 to 60% w/w sorbitol, preferably 45 to 55%, and b) from 20% to 40% w/w n-alkenyl succinate starch, preferably 25 to 35%.

In a further embodiment of the invention, the fat substitute further comprises a thickener. A thickener in this context means edible ingredients which contribute substantially to the overall viscosity at temperatures above 60°C. The thickener is selected from the group consisting of starches, flours and hydrocolloids, and mixtures thereof. The thickener can be polydextrose, arabinogalactan, chitosan, chitin, gelatine, xanthan, pectin, cellulosics, konjac, gum arabic, soy fiber, inulin, hydrolysed guar, guar gum, beta-glucan, carrageenan, locust bean gum, alginate, polyglycol alginate, starch or mixtures thereof. Preferably starch is applied. The starch used for the current invention is obtained from a source selected from the group consisting of native leguminous starch, native cereal starch, native root starch, native tuber starch, native fruit starch, modified leguminous starch, modified cereal starch, modified root starch, modified tuber starch, modified fruit starch, waxy type starches, high amylose starches and mixtures thereof. Actually, the starches and flours which are still containing proteins, such as wheat gluten (hereinafter "starch"), can be derived from any native source, wherein native relates to the fact that said starch is found in nature. Typical sources for the starches are cereals, tubers, roots, legumes, fruit starches and hybrid starches. Suitable sources include corn, pea, potato, sweet potato, sorghum, banana, barley, wheat, rice, sago, amaranth, tapioca, arrowroot, canna, and waxy (containing at least about 95% by weight amylopectin) or high amylose (containing at least 40% by weight amylose) varieties thereof. Also suitable are starches derived from a plant obtained by breeding techniques including crossbreeding, translocation, inversion, transformation or any other method of gene or chromosome engineering to include variations thereof. In addition, starch derived from a plant grown from artificial mutations and variations of the above generic composition, which may be produced by known standard methods of mutation breeding are also suitable herein. Modifications are intended to include chemical modifications and physical modifications. The chemical modifications are intended to include without limitation crosslinked starches, acetylated starches, hydroxyethylated and hydroxypropylated starches, inorganically esterified starches, cationic, anionic, oxidized starches, zwitterionic starches, and combinations thereof. Physically modified starches such as thermally inhibited starches may also be suitable for use herein, as base material. In a preferred embodiment the thickener of the current invention is a native starch, more preferably corn starch, tapioca starch, and mixtures thereof.

Preferably, the fat substitute comprises a) from 30 to 60% w/w polyols, preferably 45 to 55%, and b) from 20 to 40% w/w n-alkenyl succinate starch, preferably 25 to 35%, and c) from 1 to 35% w/w thickener, more preferably 15 to 30%. More preferably, the polyol in above fat substitute is sorbitol and/or at least one n-alkenyl succinate starch is an n-octenyl succinate starch.

Furthermore, the current invention relates to a dry fat substitute comprising a blend of at least one n-alkenyl succinate starch and at least one polyol. In addition, it relates to a semi-liquid fat substitute comprising an edible liquid and a fat substitute according to the current invention. The edible liquid such as water and/or a water-miscible liquid (such as milk, buttermilk, or to a lesser extent alcohol for example) may be added to the dry fat substitute.

Preferably, the semi-liquid fat substitute according to the current invention has a consistency at 20°C in the range from 50 to 400 loadgram, preferably from 100 to 300, more preferably from 100 to 250. The consistency of the semi-liquid fat substitute is measured on a Stevens Texture Analyzer QTS 25 using a cone as penetration tool. The speed of penetration is 50 mm/minute and the distance of penetration is 25 mm. Preferably, said semi-liquid fat substitute comprises from 5 to 30% edible liquid based on the dry weight of the fat substitute, preferably 10 to 20%. The semi-liquid fat substitute may further comprise one or more flavouring(s), colorant(s), vitamin(s) and/or mineral(s) and the like, depending upon the subsequent application.

The term "fat substitute", as used herein, is referring to the dry as well as the semi-liquid fat substitute of the present invention, unless it is specifically mentioned.

In its final form, the (dry or semi-liquid) fat substitute of the present invention is an effective fat substitute for use in bakery products, margarine, mayonnaise, sauces, dressings, chocolate based drinks, ice cream and frozen desserts.

Furthermore, the fat substitute of the invention may be used in a dough comprising dough ingredients or in a bakery product comprising bakery ingredients. Dough in this context means the paste prepared from the fat substitute of the current invention and dough ingredients before any further processing, whereas bakery products mean the end products of the baking process.

The additional dough and bakery ingredients will be apparent to a person skilled in the art. They may include, for instance: flour, raising agents (such as baking powder and/or yeast), water and/or water miscible liquids (such as milk, alcohols, etc.), sweeteners (e.g. sugar or artificial sweeteners), flavourings (e.g. synthetic or natural flavourings such as vanilla, caramel and/or almond flavourings; fruit juices such as orange, grapefruit, pear, cherry, raspberry and/or blackcurrant juices; vegetable extracts such as tomato, carrot, onion and/or garlic extracts; spices; herbs; etc.) and/or one or more natural or synthetic colorants and the like. Optionally, vitamins (such as vitamins A, D3, E, K1, C, B1, B2, B5, B6, B12 and PP, folic acid and biotin) and minerals (such as sodium, potassium, calcium, phosphorus, magnesium, chloride, iron, zinc, copper, manganese, fluorine, chromium, molybdenum, selenium and iodine) can also be added. The flour used for the dough or for bakery products may be from any source (e.g. corn flour, soy flour or wheat flour). Most preferably, however, it will be wheat flour. It is the protein of wheat flour, gluten, which distinguishes it from other flours and makes it of particular value in the baking industry. In hard, high-protein wheats, there is more gluten in the endosperm and the starch cells are firmly cemented together. In soft, low-protein wheats the bonding is not so firm. For most cakes a soft, low-protein flour is needed for obtaining a tender cake. Flours used for pan bread production will generally be milled from hard wheats of high protein content, although soft wheats can give optimum quality in the type of bread that is most popular in some countries. Ideally, the flour will be non-chlorinated. It has indeed been found that certain starches - such as those used in the present invention (i.e. n-OSA starch) - can be used to supplement non-chlorinated flour whilst maintaining characteristics such as dough volume, crumb hardness and bakery product volume comparable to those of products prepared with chlorinated flour (the use of which is now banned in many countries).

The choice of additional ingredients will depend, of course, on the dough and bakery product being produced. Indeed, the fat substitute according to the present invention can be used in the manufacture of bakery products such as cakes, biscuits, cookies, waffles, donuts, muffins, yeast leavened dough based bakery products, fat-filling and bakery cream.

More specifically it can be used in cakes such as pound cake, sponge cake, chiffon cake, cheesecake, fruitcake, layer cake and gingerbread.

Furthermore, it can be used in a cake, which comprises from 1 to 20% of fat substitute of the current invention by weight on the dry substance of the baked products, preferably 1 to 15%, more preferably 3 to 13%.

The cake dough prepared with the fat substitute is good aerated and smooth. The cakes have a regular and fine crumb structure. For example, a high quality pound cake is obtained. The water activities (a_{w}) of the cakes obtained employing the fat substitute of the current invention imply a shelf life similar to standard cakes.

Actually, the fat substitute concept creates the possibility to decrease the amount of energy in cakes resulting in an application with acceptable sensorial properties and good shelf-life. The product containing the fat substitute provides softness and melting effect of crumb which facilitates its consumption.

Furthermore, the fat substitute can be used in biscuits comprising 1 to 8% of fat substitute of the current invention by weight on the dry substance of the baked product, preferably 2 to 5%. Biscuits with 1 to 20% reduction of fat by replacing it with the fat substitute of the current invention are high quality products.

Thus, the present invention further relates to the use of this fat substitute in bakery products in which it is desired to reduce cholesterol levels and/or calorie content. In fact, the fat substitute of the current invention can further be used in sugar-reduced products, wherein the sugar is for instance replaced fully or partially by polyols or sugar substitutes either alone or in combination with intense sweeteners.

The fat substitute can be used in a fat-filling that comprises from 1 to 10% of fat substitute of the current invention by weight of the fat-filling, preferably 1 to 5%, and further ingredients. Suitable further ingredients are without any limitation, sugar, milk powder, chocolate powder and eventually fat, depending upon partial or full fat substitution. Products including the fat substitute of the current invention show a long shelf life.

The fat substitute can be used in a yeast leavened dough based bakery product comprising 1 to 10% of fat substitute of the current invention by weight on the dry substance of the yeast leavened dough based bakery product, preferably 1 to 5%.

Yeast leavened dough based bakery products are for example Brioche style and toast breads. Concerning colour, shape, crumb colour and texture is the Brioche bread wherein one third of the butter was replaced by the fat substitute according to the current invention equal or even superior than the bread without fat substitute.

The fat substitute can be used in a dressing comprising dressing ingredients and the fat substitute according to the current invention. Preferably, the dressing comprises from 1 to 15% of fat substitute of the current invention by weight of the dressing, more preferably from 1 to 7%. This percentage is based upon the total weight of the dressing. The additional dressing ingredients will be apparent to a person skilled in the art. They may include, but are not limited to, all kinds of vegetable oils, egg yolk, edible liquids (such as water), all kinds of vinegars, mustards, sugars, salts, starches and other hydrocolloids including but not limited to polydextrose, arabinogalactan, chitosan, chitin, gelatine, xanthan, pectin, cellulosics, konjac, gum arabic, soy fiber, inulin, hydrolysed guar, guar gum, beta-glucan, carrageenan, locust bean gum, alginate, polyglycol alginate.

A preferred method for preparing the fat substitute according to the current invention is by application of a fluidized bed reaction. For example, the polyol can be sprayed as a liquid (e.g. syrup) into the other ingredients of the fat substitute of the current invention or water can be sprayed into the ingredients of the fat substitute of the current invention. This leads to a fat substitute with desired moisture content and high porosity that can then further be employed in applications as mentioned previously.

The current invention has also the following advantages: The fat substitute of the current invention is spoonable and has a white opaque and glossy surface; there is no separation occurring during storage; while fat has an energy of 9 kcal/g, the fat substitute of the current invention has a reduced energy value of 3.1 kcal/g for the dry fat substitute and 2.6 kcal/g for a semi-liquid fat substitute containing 22% water based on the dry weight of the fat substitute, therefore the products prepared with this fat substitute exhibit a significant reduction of the caloric value and yet the perception of fat is obtained; the water activity values (a_{w}) of products prepared using the fat substitute of the current invention indicate a long shelf life.

The current invention is illustrated in the following example.

### Example 1

### Preparation of semi-liquid fat substitute

### Ingredients:

1) 288 g (n-alkenyl succinate starch, 12635, Cargill)
2) 472 g (Polyol, 16656, Cargill)
3) 240 g (Thickener, 03401, Cargill)
4) 220 g water.

The three first ingredients were thoroughly dry blended and the fourth ingredient, water, was slowly added to the first blend, at a temperature between 20 and 40°C. Everything was mixed in the Hobart mix for 8 minutes.

### Example 2

### Preparation of biscuits with 20% fat reduction

The biscuits were prepared according to a reference recipe and a recipe including the fat substitute of example 1.

Recipe: The quantities are expressed in grams.

| | | |
|---|---|---|
| Refined palm oil | 15 | 12 |
| Semi-liquid fat substitute of example 1 | 0 | 3 |
| Sucrose (S1) | 15.3 | 15.3 |
| Whole milk solids | 0.6 | 0.6 |
| Salt | 0.5 | 0.5 |
| Water | 7.9 | 7.9 |
| Flour (Duo from Ceras) | 60 | 60 |
| Baking powder | 0.7 | 0.7 |
| Total | 100 | 100 |

All the ingredients (except the flour, baking powder and water) were mixed during 5 minutes (at medium speed of mixer). Water was then added and mixed in during I minute. Flour and baking powder were then added and the whole was further mixed for 2.5 minutes. The dough was laminated until a thickness of 3.5 mm was reached. These laminates were cut in round pieces by applying a round plug.

The biscuits were baked at 210°C for 12 minutes.

### Results:

The dough with fat substitute exhibited the same properties as the reference dough. No shrinking effect was observed. The colour (light brown), the crumb colour (pale yellow), the crumb structure (open and round pores), the bottom structure (somewhat open) as well as taste, and edibility (short, crumbly and dry) were identical for the reference material and the biscuits comprising the fat substitute of example 1. After 5 weeks of storage, no cracks within the biscuits were observed. A 20% fat reduced biscuit prepared according this recipe is a high quality biscuit.

### Example 3

### Preparation of fat-filling with 10% fat reduction

Recipe: The quantities are expressed in grams.

The fat-filling was prepared according to a reference recipe and a recipe including the fat substitute of example 1.

| | Reference recipe | Recipe including fat substitute of example 1 |
|---|---|---|
| Fat | 330 | 297 |
| Semi-liquid fat substitute of example 1 | 0 | 33 |
| Icing sugar | 300 | 300 |
| Dextrose | 220 | 220 |
| Cocoa (10% fat) | 100 | 100 |
| Skimmed milk powder | 50 | 50 |
| Total | 1000 | 1000 |

The fat substitute and the remaining fat were creamed into a Hobart mixer until smooth mixture. The cocoa powder was added, followed by the icing sugar and the dextrose. Everything was mixed for 5 minutes at medium speed of the Hobart mixer. Afterwards the fat filling is packed.

The characteristics of the fat-filling are displayed in Table 1.

**Table 1**

| Characteristics | Reference | Fat filling containing Fat substitute of example 1 |
|---|---|---|
| a_{w} | 0.419 | 0.449 |
| Hardness measured on Stable Micro Systems with a penetration depth of 20 mm employing plastic tube P4 (4 mm diameter) | | |
| after 48 hours, at 20°C, | 100 grams | 122 grams |
| after 8 weeks at 20°C | 100 grams | 118 grams |
| Specific volume cm³/g | 1.52 | 1.49 |

Biscuits were filled with the fat-fillings and stored at 35°C. After 2 weeks of storage, none of the trials showed leaking problems and the taste was still good. The fat-fillings containing the fat substitute of example 1 are somewhat harder but exhibit a less fatty mouth feel compared to the reference fat-filling. The water activity value (a_{w}) of the fat-filling containing the fat substitute of example I signifies a long shelf life.

### Example 4

### Preparation of cake with 25% fat reduction

### Recipe:

The cake was prepared according to a reference recipe and a recipe including the fat substitute of example 1. The quantities are expressed in grams.

| | Reference recipe | Recipe including fat substitute of example 1 |
|---|---|---|
| Cake mix | 1100 | 1100 |
| Whole eggs | 550 | 550 |
| Semi-liquid fat substitute of example 1 | | 138 |
| Margarine | 550 | 412 |
| Total | 2200 | 2200 |

All the ingredients were mixed during 5 minutes in a Hobart mixer. 400 g of the dough was transferred into a tin, and baked for 55 minutes at 175°C. The results of the dough characteristics and the baked product (cake) are displayed in Table 2.

**Table 2**

| Characteristics Dough | Reference | Product containing fat substitute of example 1 |
|---|---|---|
| Temperature dough (°C) | 24.5 | 24.5 |
| Consistency measured by Stevens Texture Analyzer QTS 25, penetration depth 25 mm with cone (loadgram) | 58 | 57 |
| Specific volume (cm³/g) | 3.27 | 3.24 |
| | | |

| Characteristics of cakes | Reference | Product containing fat substitute of example I |
|---|---|---|
| Weight (g) | 367 | 368 |
| Volume (cm³) | 1825 | 1850 |
| Specific volume (cm³/g) | 4.97 | 5.02 |
| Hardness measured on Stable Micro Systems, cone P5, 5 mm diameter, penetration 20 mm (g) | | |
| Day 21 | 4926 | 3397 |
| Day 40 | 5688 | 4317 |
| a_{w} changes with time: | | |
| Day 21 | 0.794 | 0.811 |
| Day 40 | 0.800 | 0.816 |

The cake dough was good aerated and smooth (applicable for reference and dough containing the fat substitute according to example 1). The cakes containing the fat substitute according to example 1 had a regular and fine crumb structure. They were also somewhat softer than the reference cake without the fat substitute which is very positive. The water activity (a_{w}) values indicated a similar shelf life for cakes containing the fat substitute according to example 1 and the reference cake. A pound cake of particular high quality was obtained using the fat substitute according to example 1).

### Example 5:

Preparation of Brioche style bread.

The breads were prepared according to a reference recipe and a recipe including the fat substitute of example 1. The quantities are expressed in grams.

| | Reference | Product containing fat substitute of example 1 |
|---|---|---|
| Flour Edelweiss Meneba | 2000 | 2000 |
| Water (10°C.) | 750 | 750 |
| Eggs | 360 | 360 |
| Butter | 240 | 160 |
| Sugar | 100 | 100 |
| Semi-liquid fat substitute of example 1 | 0 | 80 |
| Milk powder (24% fat) | 60 | 60 |
| Yeast | 75 | 75 |
| Glucose syrup (fructose content: 30% by weight on dry substance) | 60 | 60 |
| ImproverS500 (Puratos) emulsifier | 40 | 40 |
| Salt | 40 | 40 |
| Lecimulthin 150 IP (Cargill) | 10 | 10 |
| Total | 3735 | 3735 |

The dough was kneaded including all ingredients, except salt, using a Kemper, type SP15, kneader during 16 minutes at speed I. The salt was added after 10 minutes of kneading. The conditions during preparation of the dough are shown in Table 3.

**Table 3.**

| | |
|---|---|
| Temperature in the bakery (°C) | 24 |
| Relative humidity in the bakery (%) | 60 |
| Water temperature (°C) | 10 |
| Temperature in the proofing cabinet (final fermentation) (°C) | 33 |
| Relative humidity in the proofing cabinet (%) | 80 |
| Temperature of the dough before baking (°C) | 26-26,3 |

The preparation was as follows. After kneading, the dough was left (relaxing time) for 30 minutes. The dough was then punched and scaled to 450 grams of dough. After rounding, the dough was left for fermentation time of 20 minutes. It was further moulded and panned and then left in the proofing cabinet for 65 minutes. After that, it was baked for 28 minutes at 220°C and then cooled for one hour. At the end, the bread was packaged.

### Results dough:

The consistency measured on a farinograph (standard AACC method, 30°C) was similar for both doughs produced. The fat reduced dough was dry, not sticky and had excellent film forming capacities. The fat replacement using the fat substitute according to example 1 did not lead to a weakening effect of the dough compared with the reference dough. Also, no additional weakening effect was discovered during fermentation time compared with reference.

### Results baked product:

| external | reference | fat reduced |
|---|---|---|
| Colour | brown | brown |
| Shape | regular | regular |
| Ovenspring (increase of volume during baking) | standard | 10 to 15% increased compared to standard |
| | | |

| internal | reference | fat reduced |
|---|---|---|
| Crumb colour | yellow | less yellow |
| Texture | soft | soft |
| Crumb structure | fine pores | finer pores (thinner cellwalls) |
| Distribution of pores | regular | regular |
| Chewability | soft | soft |
| Feel | somewhat sticky | somewhat sticky |
| Feel after 4 days | less soft | less soft |
| | somewhat crumbly | smoother than reference |
| Taste | fatty | less fatty |
| Specific volume (cm³/g) | 5,54 | 5,57 |
| Hardness measured on Stable Micro Systems, cone P45 (4.5 mm diameter), penetration 25 mm: | | |
| Day 2 | 469 | 481 |
| Day 5 | 621 | 635 |

The value for hardness is the mean value of 10 measurements carried out.

### Example 6:

Reduction of fat from 70% oil to 30% w/w oil in dressings.

### Preparation of fat substitute

Ingredients:
1) 24% w/w (n-alkenyl succinate starch, 12635, Cargill)
2) 47% w/w (Polyol, 16616, Cargill)
3) 29% w/w (Thickener 06748, Cargill)

The dressings were prepared according to the reference recipe with 70% oil and a 30 % w/w oil recipe with the above fat compound. The quantities are expressed as percentages of the total weight of the dressing.

| | Reference: 70% w/w oil dressing | 30% w/w oil dressing + fat substitute | Phases |
|---|---|---|---|
| Fat substitute | 0.0 | 3.0 | Water phase |
| C*PolarTex 06748 (Cargill) | 0.0 | 3.4 | |
| Sugar | 3.0 | 3.0 | |
| Salt | 2.0 | 2.0 | |
| Potassium sorbate | 0.1 | 0.1 | |
| Water | 14.2 | 49.8 | |
| Sunflower oil | 5.0 | 5.0 | Dispersion phase |
| Egg yolk powder | 3.5 | 1.5 | |
| Guar gum/xanthan gum (2/3 by weight) | 0.2 | 0.2 | |
| Sunflower oil | 65.0 | 25.0 | Oil phase |
| Vinegar | 5.0 | 5.0 | Acid phase |
| Mustard | 2.0 | 2.0 | |
| Total | 100 | 100 | |

The preparation of the dressing was carried out as follows on a MaxxD lab colloid mill. The colloid mill was put under vacuum (700mbar). The water phase of the dressing was put into the vessel and the MaxxD lab colloid mill was switched on homogenization mode (30 seconds on 1200 rpm and 60 seconds at 0 rpm). The pressure in the vessel was restored to atmospheric pressure by opening the air-inlet valve of the vessel. Then, it was heated up to 95°C and the homogenization mode was stopped when 95°C was reached.

The Maxx D lab colloid mill was put under vacuum (700mbar) and cooled down to 35°C. When 35°C was reached the homogenizer was switched on at 3000 rpm.

The dispersion phase was added into the Maxx D lab colloid mill and the mixture homogenized continuously for 30 seconds. Then, the oil phase was added within a time of 60 seconds. After 2/3 of the amount of the oil phase was added, the acid phase was added. The homogenization was continued for 30 seconds.

The pressure in the vessel was restored to atmospheric pressure by opening the air-inlet valve of the vessel.

The two prepared dressings have comparable properties. Sensory evaluation showed similar results for both: mouthfeel, body, color, shortness, smoothness and gloss are comparable for both. Both dressings were of equally excellent quality.

### Example 7:

Reduction of fat from 30% oil to 10% w/w oil in a dressing with and without egg yolk.

### Preparation of fat substitute

Ingredients:
1) 24% w/w (n-alkenyl succinate starch, 12635, Cargill)
2) 47% w/w (Polyol, 16616, Cargill)
3) 29% w/w (Thickener 12748, Cargill)

The dressings were prepared according to the reference recipe with 70% oil and a 30 % w/w oil recipe with the above fat compound. The quantities are expressed as percentages of the total weight of the dressing.

| | Reference: 30% oil dressing | 10% oil with egg yolk - 3% fat substitute | 10% oil dressing without egg yolk - 3% fat substitute | Phases |
|---|---|---|---|---|
| Fat substitute | 0.0 | 3.0 | 3.0 | Water phase |
| Sugar | 3.0 | 2.1 | 2.1 | |
| Salt | 2.0 | 2.0 | 2.0 | |
| Potassium sorbate | 0.1 | 0.1 | 0.1 | |
| Water | 53.2 | 69.1 | 68.9 | |
| C*HiForm 12748 (Cargill) | 3.0 | 5.0 | 6.7 | Dispersion phase |
| Sunflower oil | 5.0 | 5.0 | 5.0 | |
| Egg yolk powder | 1.5 | 1.5 | 0.0 | |
| Guar gum/xanthan gum (2/3 by weight) | 0.2 | 0.2 | 0.2 | |
| Sunflower oil | 25.0 | 5.0 | 5.0 | Oil phase |
| Vinegar | 5.0 | 5.0 | 5.0 | Acid phase |
| Mustard | 2.0 | 2.0 | 2.0 | |
| Total | 100.0 | 100.0 | 100.0 | |

The preparation of the dressing was carried out as follows on a MaxxD lab colloid mill. The colloid mill was put under vacuum (700mbar). The water phase of the dressing was put into the vessel and the MaxxD lab colloid mill was switched on homogenization mode at 3000 rpm. The dispersion phase was added into the Maxx D lab colloid mill and the mixture homogenized continuously for 30 seconds. Then, the colloid mill was stopped and the mixture was left for 5 minutes. The colloid mill was switched on again at 3000 rpm. Then, the oil phase was added within a time of 60 seconds. After 2/3 of the amount of the oil phase was added, the acid phase was added. The homogenization was continued for 30 seconds.

The pressure in the vessel was restored to atmospheric pressure by opening the air-inlet valve of the vessel.

The two prepared dressings have comparable properties. Sensory evaluation gave similar dressings of excellent quality: mouthfeel, body, color, shortness, smoothness and gloss are comparable for the reference sample, the sample with fat compound and the sample with fat compound and no egg york.

## Claims

1. A fat substitute comprising
a) from 30 to 60% w/w polyols, preferably 45 to 55%, and
b) from 20 to 40% w/w n-alkenyl succinate starch, preferably 25 to 35%.

2. The fat substitute according to claim 1, wherein at least one n-alkenyl succinate starch is an n-alkenyl succinate waxy starch.

3. The fat substitute according to either claim 1 or claim 2, wherein the n-alkenyl succinate starch is n-octenyl succinate starch.

4. The fat substitute according to any one of claims 1 to 3, wherein the polyol is selected from the group consisting of glycerol, erythritol, threitol, arabinitol, xylitol, ribitol, allitol, altritol, gulitol, galactitol, mannitol, sorbitol, talitol, maltitol, isomaltitol, isomalt, lactitol, and mixtures thereof, preferably sorbitol.

5. The fat substitute according to any one of claims 1 to 4, wherein the fat substitute further comprises a thickener.

6. The fat substitute according to claim 5, wherein the thickener is selected from the group consisting of starches, flours, hydrocolloids and mixtures thereof, preferably starches.

7. The fat substitute according to either claim 5 or claim 6, wherein the system comprises
a) from 30 to 60% w/w polyols, preferably 45 to 55%,
b) from 20 to 40% w/w n-alkenyl succinate starch, preferably 25 to 35%,
c) from 1% to 35% w/w thickener, preferably 15 to 30%.

8. The fat substitute according to claim 7, wherein the polyol is sorbitol.

9. The fat substitute according to either claim 7 or claim 8, wherein at least one n-alkenyl succinate starch is an n-alkenyl succinate waxy starch.

10. The fat substitute according to any one of claims 7 to 9, wherein n-alkenyl succinate starch is n-octenyl succinate starch.

11. The fat substitute according to any one of claims 1 to 10, wherein the fat substitute is in the form of a blend.

12. A semi-liquid fat substitute comprising an edible liquid and a fat substitute according to any one of claims 1 to 11, wherein the semi-liquid fat substitute comprises 5 to 30% edible liquid based on the dry weight of the fat substitute, preferably 15 to 25%.

13. The semi-liquid fat substitute according to claim 12, wherein the consistency of the semi-liquid fat substitute at 20°C is in the range from 50 to 400 loadgram, preferably from 100 to 300, more preferably from 100 to 250.

14. Use of a fat substitute according to any one of claims 1 to 13 in bakery products, margarine, mayonnaise, sauces, dressings, ice cream or frozen desserts.

## Patentansprüche

1. Fettersatz, umfassend
a) 30 bis 60 Gew.-% Polyole, bevorzugt 45 bis 55 Gew.-%, und
b) 20 bis 40 Gew.-% n-Alkenylsuccinat-Stärke, bevorzugt 25 bis 35 Gew.-%.

2. Fettersatz nach Anspruch 1, wobei mindestens eine n-Alkenylsuccinat-Stärke eine n-Alkenylsuccinat-Wachsstärke ist.

3. Fettersatz nach Anspruch 1 oder Anspruch 2, wobei die n-Alkenylsuccinat-Stärke n-Octenylsuccinat-Stärke ist.

4. Fettersatz nach einem der Ansprüche 1 bis 3, wobei das Polyol ausgewählt ist aus der Gruppe, bestehend aus Glycerol, Erythritol, Threitol, Arabinitol, Xylitol, Ribitol, Allitol, Altritol, Gulitol, Galactitol, Mannitol, Sorbitol, Talitol, Maltitol, Isomaltitol, Isomalt, Lactitol und Gemischen davon, bevorzugt Sorbitol.

5. Fettersatz nach einem der Ansprüche 1 bis 4, wobei der Fettersatz ferner ein Verdickungsmittel umfasst.

6. Fettersatz nach Anspruch 5, wobei das Verdickungsmittel ausgewählt ist aus der Gruppe, bestehend aus Stärken, Mehlen, Hydrokolloiden und Gernischen davon, bevorzu,gt Stärke.

7. Fettersatz nach Anspruch 5 oder Anspruch 6, wobei das System
a) 30 bis 60 Gew.-% Polyole, bevorzugt 45 bis 55 Gew.-%,
b) 20 bis 40 Gew--% n-Alkenylsuccinat-Stärkc, bevorzugt 25 bis 35 Gew.-%,
c) 1 bis 35 Gew.% Verdickungsmittel, bevorzugt 15 bis 30 Gew.-%, umfasst.

8. Fettersatz nach Anspruch 7, wobei das Polyol Sorbitol ist.

9. Fettersatz nach Anspruch 7 oder Anspruch 8, wobei mindestens eine n-Alkenylsuccinat-Stärke eine n-Alkenylsuccinat-Wachsstärke ist.

10. Fettersatz nach einem der Ansprüche 7 bis 9, wobei die n-Alkenylsuccinat-Stärke n-Octenylsuccinat-Stärke ist.

11. Fettersatz nach einem der Ansprüche 1 bis 10, wobei der Fettersatz in Form eines Verschnitts vorliegt.

12. Halbflüssiger Fettersatz, umfassend eine essbare Flüssigkeit und einen Fettersatz nach einem der Ansprüche 1 bis 11, wobei der halbflüssige Fettersatz 5 bis 30 % essbare Flüssigkeit, basierend auf dem Trockengewicht des Fettersatzes, bevorzugt 15 bis 25 %, umfasst.

13. Halbflüssiger Fettersatz fach Anspruch 12, wobei die Konsistenz des halbflüssigen Fettersatzes bei 20 °C im Bereich von 50 bis 400 Gramm Last (loadgram), bevorzugt 100 bis 300, stärker bevorzugt 100 bis 250 liegt.

14. Verwendung eines Fettersatzes nach einem der Ansprüche 1 bis 13 in Backwaren, Margarine, Mayonnaise, Saucen, Dressings, Eiscreme oder Gefrierdesserts.

## Revendications

1. Substitut de matière grasse comprenant
a) de 30 à 60 % en poids de polyols, de préférence, 45 à 55 %, et
b) de 20 à 40 % en poids d'amidon n-alcényl-succinate, de préférence, de 25 à 35 %.

2. Substitut de matière grasse selon la revendication 1, dans lequel au moins un amidon n-alcényl-succinate est un amidon cireux n-alcényl-succinate.

3. Substitut de matière grasse selon la revendication 1 ou la revendication 2, dans lequel l'amidon n-alcényl-succinate est l'amidon n-octényl-succinate.

4. Substitut de matière grasse selon l'une quelconque des revendications 1 à 3, dans lequel le polyol est choisi dans le groupe comprenant le glycérol, l'érythritol, le thréitol, l'arabinol, le xylitol, le ribitol, l'allitol, l'altritol, le gulitol, le galactitol, le mannitol, le sorbitol, le talitol, le maltitol, l'isomaltitol, l'isomalt, le lactitol et leurs mélanges, de préférence, le sorbitol.

5. Substitut de matière grasse selon l'une quelconque des revendications 1 à 4, le substitut de matière grasse comprenant en outre un épaississant.

6. Substitut de matière grasse selon la revendication 5, dans lequel l'épaississant est choisi dans le groupe comprenant les amidons, les farines, les hydrocolloïdes et leurs mélanges, de préférence, les amidons.

7. Substitut de matière grasse selon l'une ou l'autre des revendications 5 ou 6, dans lequel le système comprend
a) de 30 à 60 % en poids de polyols, de préférence 45 à 55 %,
b) de 20 à 40 % en poids d'amidon n-alcényl-succinate, de préférence 25 à 35 %,
c) de 1 % à 35 % en poids d'épaississant, de préférence de 15 à 30 %.

8. Substitut de matière grasse selon la revendication 7, dans lequel le polyol est le sorbitol.

9. Substitut de matière grasse selon l'une ou l'autre des revendications 7 ou 8, dans lequel au moins un amidon n-alcényl-succinate est un amidon cireux n-alcényl-succinate.

10. Substitut de matière grasse selon l'une quelconque des revendications 7 à 9, dans lequel l'amidon n-alcényl-succinate est l'amidon n-octényl-succinate.

11. Substitut de matière grasse selon l'une quelconque des revendications 1 à 10, le substitut de matière grasse se présentant sous forme d'un mélange.

12. Substitut de matière grasse semi-liquide comprenant un liquide comestible et un substitut de matière grasse selon l'une quelconque des revendications 1 à 11, le substitut de matière grasse semi-liquide comprenant 5 à 30 % de liquide comestible sur la base du poids sec du substitut de matière grasse, de préférence, 15 à 25 %.

13. Substitut de matière grasse semi-liquide selon la revendication 12, dans lequel la consistance du substitut de matière grasse semi-liquide à 20 °C est de l'ordre de 50 à 400 grammes de charge, de préférence de 100 à 300, de manière davantage préférée, de 100 à 250.

14. Utilisation d'un substitut de matière grasse selon l'une quelconque des revendications 1 à 13 dans des produits de boulangerie, la margarine, la mayonnaise, des sauces, des assaisonnements, de la crème glacée ou des desserts congelés.
